Europäisches Patentamt

European Patent Office

Office européen des brevets

(11) Publication number: **0 161 077**
A1

(12) **EUROPEAN PATENT APPLICATION**

(21) Application number: 85302533.6

(22) Date of filing: 11.04.85

(51) Int. Cl.⁴: **C 02 F 3/08**
**C 02 F 3/30**

(30) Priority: 11.04.84 AU 4526/84
31.07.84 AU 6309/84

(43) Date of publication of application:
13.11.85 Bulletin 85/46

(84) Designated Contracting States:
AT BE CH DE FR GB IT LI LU NL SE

(71) Applicant: ROTA-DISC PTY. LIMITED
25 Park Drive
Dandenong Victoria(AU)

(72) Inventor: Scholes, John Denton
4 Keraboite Court
Mount Eliza, Victoria 3930(AU)

(74) Representative: Warren, Anthony Robert et al,
BARON & WARREN 18 South End Kensington
London W8 5BU(GB)

(54) Sewage treatment.

(57) The invention relates to a sewage treatment apparatus (10) adapted to be associated with a septic tank to which the sewage is passed and which acts as a primary treatment plant and from which relatively solid free liquid can be removed, the removal being over a range of fluid level heights. The apparatus includes an inlet (25) through which, when the fluid height is above a predetermined minimum, there is flow to a delivery position from which fluid is passed through a series of treatment compartments (20, 21, 22). Each compartment contains a bank of discs (35, 36, 37) the discs being mounted on a shaft (30) for rotation about a substantially horizontal axis and being spaced to permit the growth of a bio-mass on the surfaces thereof but being sufficiently spaced to prevent the mass extending therebetween. After passing through the treatment compartments, the fluid passes to a clarifier (18) in which the surface of the fluid in the clarifier is raked or otherwise physically distributed to remove gas from the bio-mass thereon. An outlet (51) is provided for liquid after passing through the clarifier.

FIG. 1

## SEWAGE TREATMENT

This invention relates to sewage treatment and, in particular, to a sewage treatment apparatus of the type using rotating biological contactor treatment or, as called herein, rotating disc treatment. The invention also has an application to clarifiers as part of a treatment plant.

Rotating disc treatment plants are known per se and, generally, they have a large number of relatively large diameter discs co-axially mounted, with up to about a half of each disc being in contact with the waste water to be treated, and which are rotated so a thin film of waste water is continually carried into the air on the surface of the discs whereby an aerobic biological slime develops and sloughs from the discs.

Such plants have generally been proposed for treatment of reasonably large quantities of waste water where the variation in demand compared to the total flow of water during any period is not great.

Such plants have not been suitable for use in, say, domestic applications where there can be certain periods of very high demand and periods where demand is reduced.

As part of a sewage treatment plant, and normally the last stage in the plant, there is provided at least one clarifier.

In large scale treatment plants, these clarifiers are equipped with scrapers to keep the walls and bottom clean and surface skimmers to remove floating sludge. In smaller treatment plants, the function of removing sludge may be performed manually by the staff operating the plant.

In cases where there is not regular, and preferably daily, maintenance, there can be a build up of floating sludge which, in time, becomes a crust on the clarifier surface and this crust causes deterioration of effluent quality, because of solubilization of

-2-

sludge decomposition products and also provides a breeding place for flies, tubifex worms and other biota.

Basically floating sludge is decomposing organic material which is buoyed to the surface of the clarifier by the gaseous products of decomposition and it is most desirable that this material be broken up and returned to the body of the liquid in the clarifier.

It is an object of the invention to provide sewage treatment which is particularly adapted for use in relatively low volume applications but where there can be substantial changes in the volume relative to the average volume of liquid to be treated.

It is a second object of the invention to provide, in a sewage treatment plant, means whereby sludge floating on the surface of a clarifier can be automatically treated so that it returns to the liquid within the clarifier.

The invention includes, in its broadest sense, a sewage treatment apparatus adapted to be associated with a septic tank to which the sewage is passed and which acts as a primary treatment plant and from which relatively solid free liquid can be removed, the removal being over a range of fluid level heights, means whereby, when the fluid height is above a predetermined minimum, there is flow to a delivery position from which fluid is passed to the apparatus which includes a rotating disc treatment portion, the discs being mounted for rotation about a substantially horizontal axis and being spaced to permit the growth of a bio-mass on the surface thereof but being sufficiently spaced to prevent mass extending therebetween, and having outlet means for liquid after passing through the rotating disc treatment.

The outlet from the rotating discs may pass to a further clarification treatment and may then pass to a further treatment, such as disinfection, or may be passed to waste or re-use.

The rotating disc portion may be divided into at least two stages and, if required, sludge from the first, or both stages can be returned to the primary fermentation area.

It may not be necessary for sludge to be returned from the second area as this can pass to the further clarification treatment from which the sludge will normally be returned to the primary treatment area.

In another aspect of the invention we provide, associated with the clarifier of a clarifier of a sewage treatment plant, mechanical means whereby the floating sludge is broken up and the gaseous products of decomposition are permitted to escape so that the material sinks into the liquid of the clarifier.

In one specific form of the device we provide a rotating shaft mounted across the surface of the clarifier and having extending therefrom at least one comb which operates to break the floating sludge into small components and to disturb the sludge so that gaseous products supporting the sludge are released and the sludge is capable of sinking into the liquid of the clarifier.

Preferably the comb may rotate in a direction opposite the direction of movement of the liquid through the clarifier so as to tend to retard the movement, and delivery from the outlet, of the floating sludge.

In a separate aspect of the invention, the sewage treatment plant may incorporate a rotating disc arrangement and a comb in the clarifier, each of which is driven by the same drive.

In order that the invention may be more readily understood and put into practice, we shall describe one embodiment of the treatment apparatus in relation to the accompanying drawings, in which:-

Fig. 1 is a sectional side view of the apparatus;

Fig. 2 is a plan view of the apparatus, with the outer casing being shown in section;

Fig. 3 is a view of part of a stack of discs showing their inter-relationship;

Fig. 4 is a view of the discs of Fig. 3 looking along line 4-4 of Fig. 3 showing the centre shaft in section;

Fig. 5 is a sectional view showing a reinforcing member for the discs;

Fig. 6 is a partial view along line 6-6 of Fig. 1 showing the comb arrangement;

Fig. 7 is a side elevation of the comb arrangement of Fig. 6; and

Fig. 8 is a control circuit useful with the invention.

The input for the apparatus of this invention is normally obtained from a septic tank which may well be a conventional septic tank which can be divided by baffles into two portions but in which, generally, the level is maintained constant.

Normally in septic tanks the inlet is into one of these portions and there is a deposit of the solid materials in sewage on the floor of this tank where this material can, over a period, be substantially digested leaving a sludge which must be removed at intervals.

Conventionally, septic tanks may need to be cleaned every five to ten years.

In the second portion of the septic tank there is little solid material, as this is prevented from moving into this portion by baffles in the tank, but there is normally activity on the top of the liquid in the septic tank, in which liquid breakdown of organic matter is occurring, and we prefer to provide an outlet part way up the height of this portion and lower than conventional outlets, which outlet may be in the form of a vertical open pipe having the actual outlet part way along its height, the upper end of the pipe extending upwardly sufficiently far to be clear of the surface of the liquid and the lower portion being at the required lower level in the tank.

The apparatus of the invention comprises a closed tank 10 which has a lower portion 11 and a lid 12.

The lower portion, in the embodiment illustrated, is substantially sunk into the ground.

This portion may be provided with a plurality of baffles 14, 15, 16, 17 thereacross, dividing the chamber into an inlet compartment 19, three treatment compartments 20, 21, 22 and a clarifier 18.

An inlet 25 opens into the inlet compartment 19 which comprises a buffer zone, the inlet 25 being in association with the previously described outlet of the septic tank.

The relationship of the height of the baffles 14 to 17 and the septic tank, if one is used, is that, when the septic tank is in its normal quiescent situation, that is when it has delivered any excess fluid, then the level in the buffer zone is below the height of the baffle 14. If the apparatus has been in use each of the other compartments are effectively filled.

In normal operation, as will be described hereinafter, there is a continual movement of liquid from the buffer zone into the first compartment 20 and, provided operation of the septic tank is relatively intermittent, the fluid in the buffer zone does not overflow the baffle 14.

However, if there is a substantial flow from the septic tank, such overflow can occur.

The lower portion of the tank 10 may be substantially semicircular in cross section and mounted in the tank 10 and coaxial with the lower portion there is a shaft 30 which is mounted for rotation in plummer blocks 31, 32 which are themselves located on the baffles 17 and 14, which shaft is adapted to be driven by a motor 33 and the interconnection between the motor and the shaft may be by means of a belt, chain drive or the like 34.

We prefer to use a belt drive in this apparatus as this provides a long life, low maintenance arrangement which does not need lubrication.

Mounted on this shaft, as will be described further hereinafter, are disc banks 35, 36, 37 and a scoop arm 40.

The normal liquid level in the tank is below the shaft 30 and approximately 40% of the area of the discs would normally be within the liquid.

Also in the clarifier 18 there is a sludge return pump 50 which, as will be described, is adapted to operate intermittently to pump sludge from the floor of the clarifier back to the buffer zone or to the septic tank, an outlet 51 whereby the clarified liquid from the treatment process is delivered either to further treatment, for re-use or waste, as will be described hereinafter, and a control box 52 which contains the control system illustrated in Fig. 8.

The number of discs in the disc bank can vary as required, but in one practical form of device, the compartment 20 is slightly longer than the compartments 21, 22 and may have a disc bank of ten discs located therein, whilst the other two compartments have disc banks of eight discs.

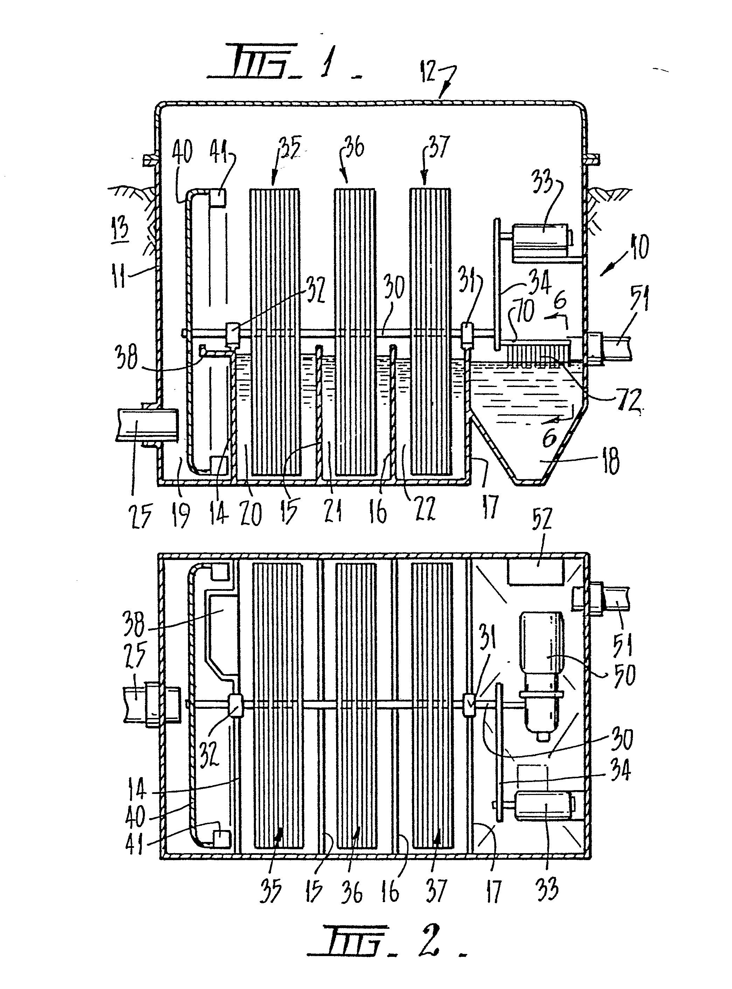

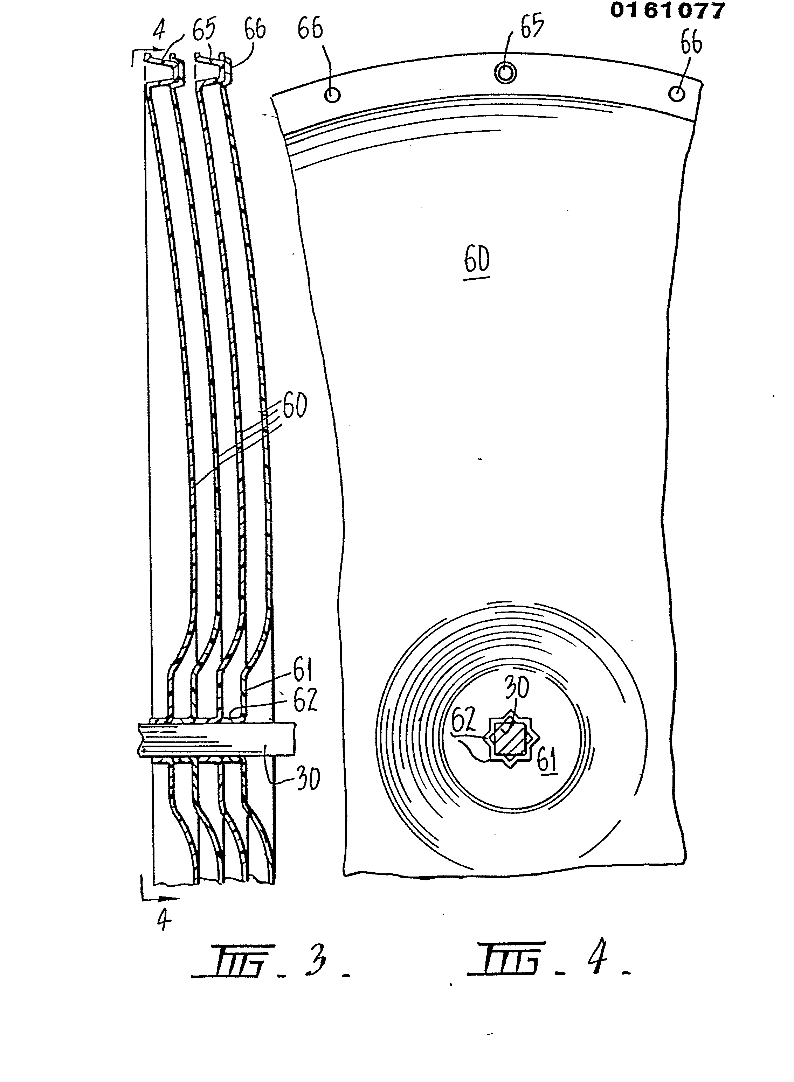

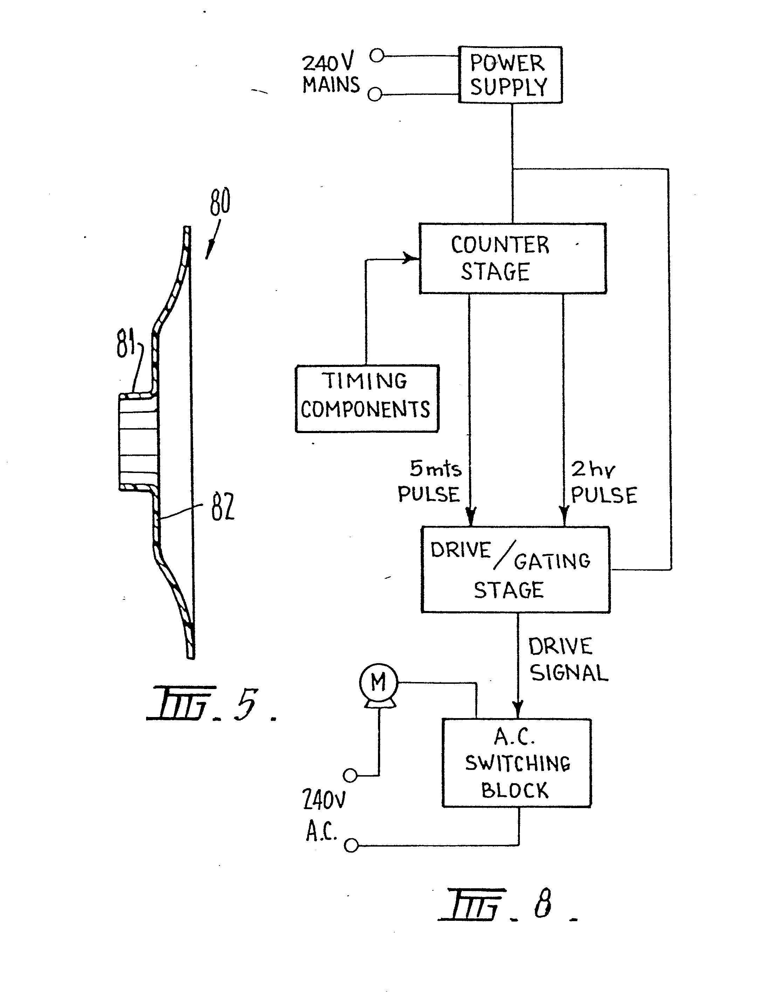

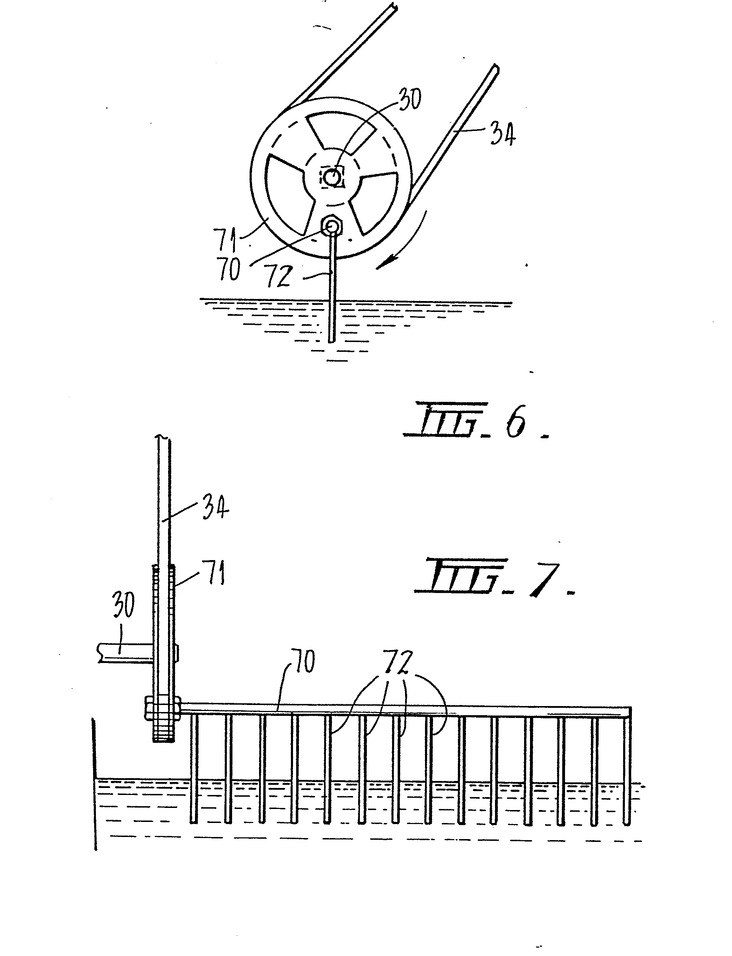

Whilst the discs may have different forms, we have found that the form illustrated in Figs. 3 and 4 are particularly suitable.

In this form, each disc 60 may be formed of a relatively rigid plastics material and can be vacuum or pressure formed from a material having a preferred thickness of 1 mm to 2 mm.

Each disc has a hub portion 61 which has an extending sleeve 62 which, as can be seen from Fig. 4, may be of a star formation.

The body of each disc is a spherical surface which gives a high strength from the material and which, at the same time, acts efficiently biologically.

Around the periphery of the disc there are a plurality of dimples 65 and recesses 66.

The radial spacing between each dimple and its adjacent recess is, in the illustrated embodiment, $15^{\circ}$.

If required, the discs may be interconnected around their periphery by adhesively securing the simples into the recesses.

The total size of the disc can readily vary depending upon the particular application, but we have found that a diameter of 1000 mm is satisfactory for a domestic system or small industrial system.

The arrangement of the star portion 62 is to enable the discs to be placed upon the shaft 30 at an orientation such that the dimples 65 of one disc can engage with the recesses 66 of the adjacent disc and the dimples 65 of that adjacent disc can, in turn, engage with the recesses 66 of the next adjacent disc, and so on. In this way the discs of the disc bank are substantially supported about their periphery.

The particular arrangement of the discs on the shaft may be done in a number of ways but it is preferred, as will be appreciated, to locate each side of each disc bank so that the relative orientations of the discs are maintained.

The spacing between the discs must be such as to permit ready access of fluid to each face of each disc but, at the same time, must be such as to inhibit or prevent the growth of bio-mass between two adjacent discs.

This spacing may be of the order of between 12mm and 25 mm.

If required, to strengthen the discs we may provide a reinforcing member 80, as illustrated in Fig. 5. The member 80 has a hub 81 which overlies the hub portion 61 of the disc and adds strength thereto and the body 82 overlies the central portion of the disc. The star formation of the reinforcing member and overlie the star portion of the hub.

In an alternative, we may provide interlocking blocks adapted to be fitted on the shaft 30 between adjacent discs and to be interconnected between holes in the discs. This permits the discs to be spaced and provides a good method of transferring torque to the discs.

The scoop arm 40 may carry a pair or more buckets 41 and it will be seen, from Fig. 2, that the baffle 14 has a rearwardly directed transfer trough 38 which is located beneath the path of travel of the buckets 41.

In place of the scoop arm, we may use a hollow arm which picks up a quantity of liquid, which quantity is dependent upon the depth of material in the buffer zone 19. In this way the feed rate is dependent on the depth of fluid in the zone.

In the illustrated embodiment the clarifier has a shaft 70 located thereover, which shaft is connected to the pulley 71 which drives the shaft 30 on which of the rotating discs are located. The shaft 70 is thus located above the surface of the liquid in the clarifier 18, which is at the same level as the liquid passing through the rotating disc compartments 20, 21, 22.

The shaft 70 forms part of a comb which can, typically, be made of wires 72 having a diameter of approximately 3 mm spaced at a spacing of 10 mm to 30 mm and which wires, during part of the rotation of the pulley 71, extend below the surface of the liquid in the clarifier.

It would be feasible to provide a mechanical arrangement, in which the direction of rotation of the comb is such that, when the comb is passing through the liquid, it is moving in a direction opposite to that in which the liquid is passing through the clarifier.

It may be desirable to provide more than one comb and, alternatively, the teeth of the comb can be located on a spiral or some other arrangement so that there tends to be movement of the solid material against the direction of movement of the liquid in the clarifier.

The operation of the system is as follows.

Fluid effluent passes into the apparatus through inlet 25 to the buffer compartment 19 and, as previously described, the level in this will increase as the septic tank overflows. As will be described, fluid is continually removed from the buffer zone so this, together with the septic tank, leads to flow balancing of the fluid.

The motor 33 is caused to operate continually, causing rotation of the scoop arm 40, the disc banks 35, 36, 37 and the comb.

The speed of rotation of the discs can vary, but we prefer to have a peripheral speed of the order of 18.25 m per minute and, for discs having a 1000 mm diameter, as described herein, the preferred speed of rotation is of the order of 5.9 rpm.

During this rotation the buckets 41 lift liquid from the buffer zone 19 and, as they move around the upper portion of the apparatus, so the liquid is caused to drop into the transfer trough 38 and thus into compartment 20.

It will be seen that the scoop arm 40 and the buckets 41 act to keep the fluid in the buffer zone 19 mixed and, as the buckets pass close to the floor of the buffer zone, so sludge in this area will tend to be picked up in the buckets and delivered to the transfer trough 38.

It will be appreciated that the rotation of the discs causes lifting of a film of water on the surface thereof and there develops a growth of aerobic biological slime on these surfaces.

When the growth is sufficient, and it can be substantial at the upstream end of the tank, the bio-mass sloughs from the surfaces of the discs and falls into the tank as a solid.

When using the disc construction of Figs. 3 and 4, the spacing between the discs is constant and, in a specific embodiment, may be 20 mm. However, we may prefer that the discs at the upstream end of the apparatus be located at a spacing greater than those at the downstream end and, as suggested, we may locate the discs at the upstream end at a spacing of approximately 25 mm, while those at the downstream end may be of the order of 12 mm.

When the system is operating, the liquid normally has a residence time in the disc tank of approximately two hours and it will be appreciated that, as the water is fed to the upstream end of the tank, so water leaves the tank at the downstream end and, under normal circumstances, the feeding of the liquid from the buffer zone into the tank is at a rate as to maintain the required residence time.

In the clarifier 18 the liquid goes through a settling process in which organic sludge falls to the bottom of the clarifier.

Also in the clarifier, a floating organic sludge may be formed.

Typically such sludge is loosely agglomerated bio-mass particles which form particles which are buoyed to the surface by the gaseous products of decomposition which particles are of the order of 20 mm to 70 mm in diameter.

Provided these particles are broken up relatively soon after formation, there is no tendency for a thick build up of sludge on the clarifier surface with the disadvantages referred to earlier herein.

The teeth 72 of the comb rotating through the liquid on the surface of the clarifier 18 tend to displace any gaseous decomposition products which buoy such surface sludge on the surface and, thus, after such agitation, the components of the surface sludge tend to resink into the liquid in the clarifier, where normal settling occurs.

During rotation, the sludge is drawn across the clarifier surface by the teeth 72 of the comb and this movement can also assist in the removal of the gas bubbles. Thus there is a tendency for the sludge to settle to the bottom of the clarifier and delivery from the clarifier is retarded.

However, the arrangement is such that more complete settling of the organic material is readily effected and the disadvantages which occur when there is a sludge build up are overcome.

Referring to the block diagram of Fig. 8, we show a control system which causes the pump 50, which pumps the sludge which has settled in the bottom of the clarifier 18, either to the buffer zone 19 or, if required, to the previous septic tank or, even, to an external treatment plant, to be operated.

It is not necessary that the pump 50 operate continually, so we provide a clock circuit or the like which is associated with dividers to provide timing components which feed to a counter stage and, at predetermined periods, this counter stage provides an outlet which drives the driven/gating stage which, in turn, provides a signal to cause the AC switching block to operate to cause the motor of the pump 50 to operate.

In normal operation, we prefer that the pump operate for a short period, say four minutes, after a longer non-operative period, say two to four hours.

Thus the counter has two outputs, one of which operates at the predetermined period, say every two or four hours from a reset to cause initiation of switching of the motor, and the other which operates four minutes after the initiation of the operation period to stop the motor operating.

We have found that, by using such an arrangement, there is continual removal of the sludge from the bottom of the clarifier before there is any substantial build up of this area and the sludge so returned is effectively treated and broken down during its next movement through the apparatus.

After passing through the clarification process, the liquid is delivered through outlet 51 and may, if required, be disinfected or could simply be passed to re-use or to waste.

If there is a sudden increase of liquid into the septic tank, which causes it to become unacceptably full, there is a flow out of this liquid into the buffer zone, and, if sufficient, it flows over the edge of the buffer zone into the first compartment 20 and so on and causes the displacement at the downstream end of liquid which would not normally be displaced therefrom. Nevertheless, because of the efficiency of the process, and assuming such situations do not occur substantially often, the liquid delivered from the tank is of an acceptable purity and, because of the general efficiency of the disc arrangement, the excess fluid which is delivered to the tank is treated relatively rapidly and, as such, by the time it leaves the tank, providing the input does not remain excessive for a substantial period, it will also be satisfactorily treated.

Because a certain amount of entrained solids enter the disc tank and because of the solids formed by the biological slime, there is a certain build-up in solids in the compartments of the tank but much of this is entrained in the fluid, it is passed to the clarifier 18 where they precipitate out and, as discussed herein, from whence they can be pumped by the pump 50, controlled by the control system of Fig. 8, to the septic tank, preferably the first chamber thereof, so that these solids tends to settle into the sludge on the floor of this chamber where degradation can occur or it can become part of the general sludge build-up which needs to be cleaned in due course. It will be appreciated that, using the system of the invention, cleaning will have to be effected more regularly than would be the case conventionally, and a period between cleaning of one to three years, depending upon the septic tank capacity, would be satisfactory.

It will be seen that because of the capacity of the system of the invention to cope with substantial variations of volume liquid passing into the septic tank, the system is suitable for domestic application and, as it can be used in association with a conventional septic tank, it can be an acceptably economical way of treating waste water in such applications.

In a modified form of system, we may prefer to use rotating discs in three or more banks with a first clarifier located between the first two banks so that solids brought into the first bank, and those formed therein can be separated before the further rotating biological contactor treatment, and a second clarifier after the last bank. This can be a most desirable arrangement where the liquid has a high amount of material which has to be broken down, or where a high quality effluent is required.

The solids from the clarification are returned to the septic tank, as is described hereinbefore.

## CLAIMS

1.      A sewage treatment apparatus (10) adapted to be associated with a septic tank to which the sewage is passed and which acts as a primary treatment plant and from which relatively solid free liquid can be removed, the removal being over a range of fluid level heights, comprising means (25) whereby, when the fluid height is above a predetermined minimum, there is flow to a delivery position from which fluid is passed to a rotating disc treatment portion (20, 21, 22) provided with discs (35, 36, 37) mounted for rotation about a substantially horizontal axis (30) and being spaced to permit the growth of a bio-mass on the surfaces thereof but being sufficiently spaced to prevent the mass extending therebetween, and outlet means (51) for liquid after passing through the rotating disc treatment portion.

2.      An apparatus as claimed in claim 1 wherein the discs are mounted for rotation on a shaft (30) which runs along the length of the apparatus and wherein means (33) are provided to rotate the shaft.

3.      An apparatus as claimed in claim 2 wherein a motor (33) within the apparatus effects rotation of the shaft.

4.      An apparatus as claimed in claim 1, 2 or 3, wherein the rotating disc treatment portion (20, 21, 22) includes treatment zones or compartments, and wherein there are at least two banks of discs each located in a separate compartment.

5. An apparatus as claimed in any one of claims 1 to 4 wherein there is an input or buffer zone or compartment (19) to which the fluid to be treated is passed.

6. An apparatus as claimed in claim 5 when appended to claim 4, wherein the buffer compartment (19) is separated from the first of the treatment compartments (20) by a wall or baffle (14) which is higher than walls or baffles (15, 16) separating the treatment compartments (20, 21, 22) in which the discs are located.

7. An apparatus as claimed in claim 5 when appended to claim 4, or in claim 6, wherein the buffer compartment includes a scoop means (40) whereby liquid can be removed from the buffer compartment (19) to the first of the treatment compartments (20).

8. An apparatus as claimed in claim 7 when appended to claim 6, wherein the baffle (14) includes a transfer trough (38) which extends over a portion of the buffer compartment, and into which the fluid from the scoop means (40) is delivered.

9. An apparatus as claimed in claim 7 or claim 8 wherein the scoop means comprises a scoop arm (40) having buckets (41) thereon, which buckets are adapted, on rotation of the scoop arm, to raise fluid from the buffer compartment and to deliver this to the first treatment compartment.

10. An apparatus as claimed in claim 7 or claim 8 wherein the scoop means comprises a member which gathers an amount of fluid which is dependent on the fluid height in the buffer compartment.

11. An apparatus as claimed in any one of claims 8 to 10 when appended to claim 2, wherein the scoop means is on the same shaft (30) as that which rotates the discs.

12. An apparatus as claimed in claim 4, or any of claims 5 to 11 when appended to claim 4, wherein there is a clarifier (18) downstream of the discs, which clarifier is provided with the outlet means (51) which, together with walls or baffles (14, 15, 16, 17) between the various compartments and between the clarifier and adjacent compartment (22), controls the height of the fluid in the apparatus.

13. An apparatus as claimed in claim 12 wherein there is a pump (50) in the clarifier which is adapted to pass sludge from the clarifier to an earlier stage of the apparatus, or to a location upstream of the apparatus.

14. An apparatus as claimed in claim 13 wherein there is a control means (52) whereby the operation of the pump is initiated at predetermined intervals and, after initiation, continues to operate for a predetermined period.

15. An apparatus as claimed in any one of claims 12 to 14 wherein there is means (70) in the clarifier which can act on the surface of the fluid therein to agitate any solids thereon.

16. An apparatus as claimed in claim 15 wherein the agitator means comprises a rake (72) which can selectively move over at least portion of the surface of the clarifier.

17. An apparatus as claimed in claim 16 wherein the rake is rotated (71) so as to cyclicly enter and move over at least portion of the surface of the clarifier.

18. An apparatus as claimed in claim 17 when appended to claim 2, wherein the rake is actuated by the shaft (30) on which the discs are mounted.

0161077

19. A disc for an apparatus as claimed in any preceding claim wherein the disc is formed of a thin material and has a hub (62) whereby torque transmitting connection with a shaft can be made and means (65, 66) on its periphery whereby it can be spaced from an adjacent similar disc in a disc pack.

20. A disc as claimed in claim 19 wherein at least portion (60) of the body of the disc is a spherical surface.

21. A disc as claimed in claim 19 or claim 20 wherein the periphery of the disc is formed with protrusions (65, 66) at equally spaced intervals, the protrusions being of two types and being adapted so that, when protrusions (65) of one type on one disc are aligned with protrusions (66) of the other type on a second, adjacent, disc, the discs contact at the protrusions and are retained in a required spatial relationship.

22. A disc as claimed in claim 21 having a hub (62) which is adapted to engage with the shaft, the hub being formed to enable the discs to be located thereon in two different orientations to enable the protrusions of the different types to contact.

23. A disc as claimed in claim 22 wherein there is a reinforcing means (80) for the discs, which reinforcing means abuts and is complementary to the hub and the adjacent area of the disc.

24. A disc assembly for an apparatus as claimed in any one of claims 1 to 18 comprising at least one disc having a central aperture through which the shaft passes and a plurality of apertures spaced thereabout, at least some of the spaced apertures being adapted to receive extensions from a hub member mounted on the shaft to be rotated therewith, a second hub member on the other side of the disc and having means to receive the extensions from the first hub member, the hub members thereby transferring torque from the shaft to the disc.

25. A disc assembly as claimed in claim 24 wherein the hub members act as spacers between the discs of the assembly.

26. A clarifier (18) having means (70) which can act on the surface of the fluid therein to agitate any solids thereon.

27.     An apparatus as claimed in any preceding claim in association with a septic tank, the output of which, in association with  a buffer compartment of the apparatus, comprises a flow balancing arrangement.

0161077

FIG. 1.

FIG. 2.

0161077

FIG. 3.    FIG. 4.

0161077

Fig. 5.

Fig. 8.

30

34

71
70
72

_FIG_ 6_

34

71

30

70          72

_FIG_ 7_

## DOCUMENTS CONSIDERED TO BE RELEVANT

| egory | Citation of document with indication, where appropriate, of relevant passages | Relevant to claim | CLASSIFICATION OF THE APPLICATION (Int. Cl.4) |
|---|---|---|---|
| K | TECHNISCHE RUNDSCHAU, vol. 72, no. 5, 5th February 1980, pages 17-24, Hallwag Verlag, Bern, CH; "Biologische Kompaktkläranlagen" | 1-5,7-13 | C 02 F 3/08 C 02 F 3/30 |
| K | US-A-3 904 525 (L.R. ROSENBERG) * Column 4, lines 15-50; column 6, line 44 - column 8, line 56 * | 1-5,19,21,22 | |
| K | DE-A-1 484 850 (J.C. STENGELIN) * Page 6, claims 1-6 * | 1-3,5,7-13 | |
| K | DE-A-1 459 511 (J.C. STENGELIN) * Page 10, claims 1,4-6; page 8, paragraph 2 * | 1-5,7-14 | |
| A | GB-A-1 324 358 (AMES CROSTA MILLS) * Page 3, lines 43-47; figure 10 * | 20 | **TECHNICAL FIELDS SEARCHED (Int. Cl.4)** C 02 F |
| A | GB-A-1 454 321 (V. STENGELIN) * Page 1, lines 44-83; page 2, lines 46-106; figures 5,6 * | 24,25 | |

--- -/-

The present search report has been drawn up for all claims

| Place of search THE HAGUE | Date of completion of the search 04-07-1985 | Examiner TEPLY J. |
|---|---|---|

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 944 502  (AB GUSTAVSBERGS FABRIKER)<br>* Page  4, paragraph 3 - page 5, paragraph 1 * | 27 | |
| A | DE-A-1 958 247  (J.C. STENGELIN)<br>* Page 6, claim 1 * | 27 | |

TECHNICAL FIELDS SEARCHED (Int. Cl.4)

The present search report has been drawn up for all claims

| Place of search | Date of completion of the search | Examiner |
|---|---|---|
| THE HAGUE | 04-07-1985 | TEPLY J. |